# EUROPEAN PATENT APPLICATION

(11) **EP 4 571 445 A1**
(43) Date of publication of application: **18.06.2025**
(21) Application number: 24218313.5
(22) Date of filing: 09.12.2024
(51) Int. Cl.: G05B 23/02

(54) **DEVICE FOR SUPPORTING OPERATION OF A PLANT**

(30) Priority: 13.12.2023 JP 2023210354
(71) Applicant: Yokogawa Electric Corporation, Tokyo 180-8750 (JP)
(72) Inventor: Ishida, Taisuke, Musashino-shi, Tokyo, 180-8750 (JP); Hagiya, Masato, Runcorn, Cheshire, WA7 1TR (GB); Kulik, Barrie, Cowes, Isle of Wight, PO31 7DA (GB); Minatoyama, Misaki, Musashino-shi, Tokyo, 180-8750 (JP); Shinozaki, Akiko, Musashino-shi, Tokyo, 180-8750 (JP); Tsubota, Ichiro, Musashino-shi, Tokyo, 180-8750 (JP)
(74) Representative: Grünecker Patent- und Rechtsanwälte PartG mbB

(57) **Abstract**

A plant operation support device is used in a plant having one or more devices and a control device that controls the one or more devices. The plant operation support device includes a plant configuration diagram storage unit that stores a plant configuration diagram constituted from the one or more devices, an alarm collection unit configured to collect alarms of the devices output from the control device when the control device determines that output values output from the devices are not within a predetermined range, an alarm generation unit configured to generate an alarm occurrence diagram that displays an alarm symbol on the plant configuration diagram to indicate that the alarms have occurred from abnormal devices that are the devices that have caused the alarms to occur, and a display unit configured to display the alarm occurrence diagram.

## Description

### BACKGROUND

### Technical Fields

The present invention relates to a plant operation support device.

### Description of Related Art

Japanese Unexamined Patent Application, First Publication No. 2022-182564 discloses a plant operation support device (a plant monitoring device) that collects alarms (warning information) that are output when an abnormality in a plant is detected and presents the collected alarms to an operator.

Incidentally, in a plant operation support device as described above, it is desirable for the alarms to be presented in a form that is easy for the operator to understand.

The present invention has been made in consideration of these circumstances, and an object thereof is to provide a plant operation support device that can present an alarm in a form that is easy for an operator to understand.

### SUMMARY

To solve the problems described above, a plant operation support device according to an aspect 1 of the present invention is a plant operation support device used in a plant having one or more devices and a control device that controls the one or more devices, and includes a plant configuration diagram storage unit that has a plant configuration diagram constituted from the one or more devices, an alarm collection unit configured to collect alarms of the devices output from the control device when the control device determines that output values output from the devices are not within a predetermined range, an alarm generation unit configured to generate an alarm occurrence diagram that displays an alarm symbol on the plant configuration diagram to indicate that the alarms have occurred from abnormal devices that are the devices that have caused the alarms to occur, and a display unit configured to display the alarm occurrence diagram.

In addition, according to an aspect 2 of the present invention, in the plant operation support device of the aspect 1, the alarm generation unit may generate the alarm symbol on the basis of at least one of an alarm occurrence time, an alarm disappearance time, a position of the abnormal device, an alarm occurrence frequency, and an alarm importance in generating the alarm occurrence diagram.

In addition, according to an aspect 3 of the present invention, in the plant operation support device of the aspect 2, the alarm generation unit may display the alarm symbol when the alarm occurs and hide the alarm symbol when the alarm disappears in generating the alarm occurrence diagram.

In addition, according to an aspect 4 of the present invention, in the plant operation support device of the aspect 2 or 3, the alarm generation unit may display the alarm symbol on or near the abnormal device in generating the alarm occurrence diagram.

In addition, according to an aspect 5 of the present invention, in the plant operation support device of any one of the aspects 2 to 4, the alarm generation unit may vary at least one of a color of the alarm symbol or a size of the alarm symbol according to the alarm occurrence frequency in generating the alarm occurrence diagram.

In addition, according to an aspect 6 of the present invention, in the plant operation support device of any one of the aspects 2 to 5, the alarm generation unit may vary at least one of a color of the alarm symbol or a size of the alarm symbol according to the alarm importance in generating the alarm occurrence diagram.

In addition, according to an aspect 7 of the present invention, the plant operation support device of any one of the aspects 1 to 6 may further include a plant status diagnosis unit configured to diagnose a status of the plant on the basis of the alarm occurrence diagram.

In addition, according to an aspect 8 of the present invention, the plant operation support device of any one of the aspects 1 to 7 may further include a plant status prediction unit configured to predict a status of the plant on the basis of a change over time of the alarm occurrence diagram.

In addition, according to an aspect 9 of the present invention, the plant operation support device of any one of the aspects 1 to 8 may further include an alarm occurrence diagram storage unit configured to store the alarm occurrence diagram in association with event information including a date and time when the alarm has occurred and a search unit configured to search the alarm occurrence diagram on the basis of the event information.

According to the aspects described above of the present invention, it is possible to provide a plant operation support device that can present an alarm in a form that is easy for an operator to understand.

Further features and aspects of the present disclosure will become apparent from the following detailed description of exemplary embodiments with reference to the attached drawings.

### BRIEF DESCRIPTION OF THE DRAWINGS

FIG. 1 is a block diagram which shows a plant operation support device according to an embodiment of the present invention.
FIG. 2 is a diagram which shows an example of an alarm occurrence diagram according to the embodiment of the present invention.
FIG. 3 is a diagram which shows an example of an alarm symbol according to the embodiment of the present invention.
FIG. 4 is a diagram which shows an example of a change over time in an alarm occurrence diagram according to the embodiment of the present invention.
FIG. 5 is a flowchart which shows an example of processing performed in the plant operation support device according to the embodiment of the present invention.

### DETAILED DESCRIPTION OF THE EMBODIMENTS

### <Plant operation support device>

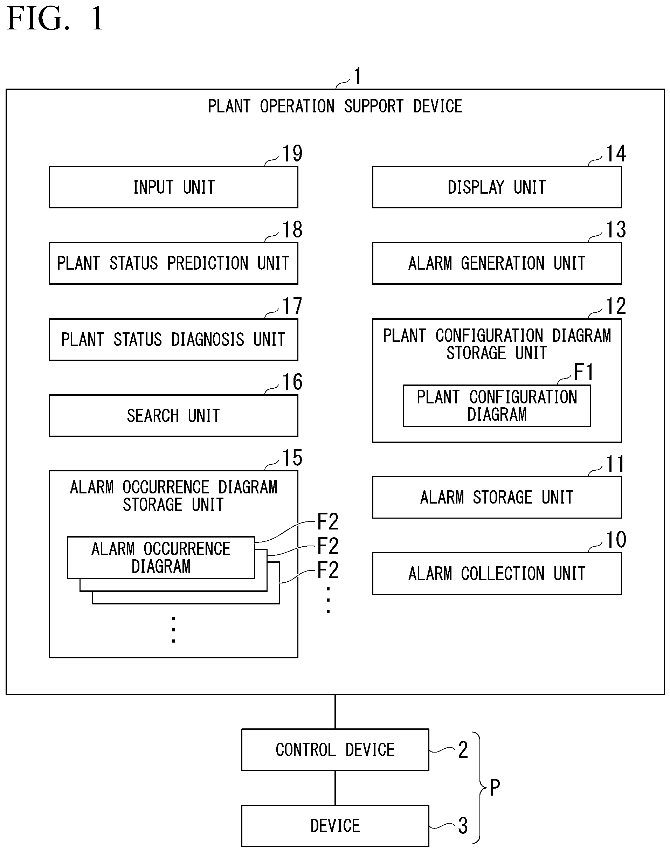

Hereinafter, a plant operation support device according to an embodiment of the present invention will be described with reference to FIGS. 1 to 4.

FIG. 1 is a block diagram which shows a plant operation support device 1 according to the present embodiment. As shown in FIG. 1, the plant operation support device 1 according to the present embodiment is used in a plant P having one or more (for example, a plurality of) devices 3 and a control device 2 that controls the one or more devices 3. Note that one control device 2 may be provided for each device 3, or one control device 2 may control a plurality of devices 3. The plant operation support device 1 according to the present embodiment includes an alarm collection unit 10, an alarm storage unit 11, a plant configuration diagram storage unit 12, an alarm generation unit 13, a display unit 14, an alarm occurrence diagram storage unit 15, a search unit 16, a plant status diagnosis unit 17, a plant status prediction unit 18, and an input unit 19.

A plant P is, for example, a chemical plant (oil plant) for oil refining or the like. The plant P, which is an oil plant, has, for example, a distillation column 3a, a tank 3b, a pump 3c, piping 3d, and the like as the devices 3 constituting the plant P. However, a type of the plant P in which the plant operation support device 1 is used can be changed as appropriate. For example, the plant P may be a water treatment plant or the like. Types of the devices 3 constituting the plant P can also be changed according to the type of the plant P.

The control device 2 outputs an alarm when an abnormality occurs in the device 3 constituting the plant P. More specifically, the control device 2 outputs (generates) an alarm (warning) when it determines that an output value output from the devices 3 is not within a predetermined range. Hereinafter, the devices 3 that have caused an occurrence of the alarm (that is, the devices 3 in which the abnormality has occurred) may be referred to as abnormal devices 3A.

The input unit 19 detects and acquires an operation (input) of an operator. The input unit 19 functions as an interface for an operator to input information to the control device 2. The input unit 19 is, for example, a touch panel sensor provided on a display unit 14, a wired or wireless keyboard, or the like.

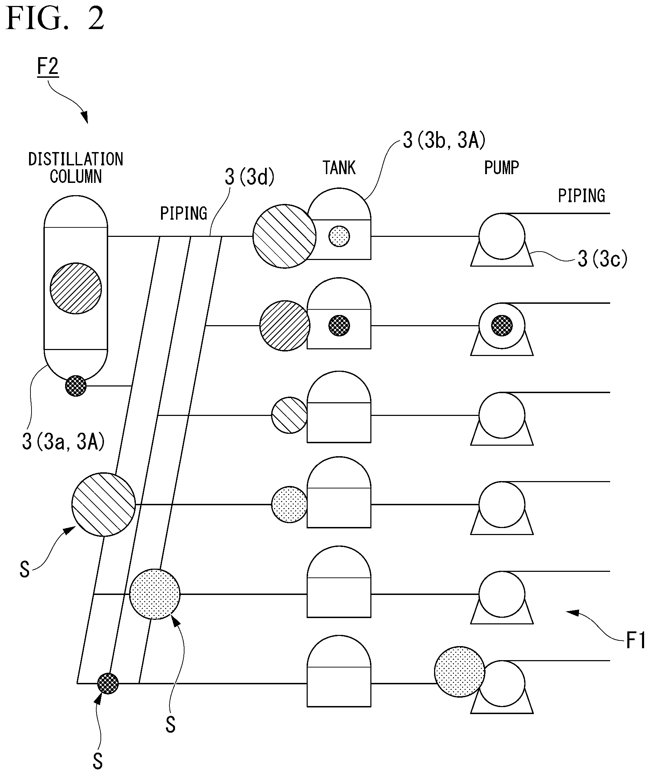

The plant configuration diagram storage unit 12 has (stores) a plant configuration diagram F1. The plant configuration diagram F1 is constituted from one or more devices 3 (that constitute the plant P). More specifically, the plant configuration diagram F1 shows the devices 3 included in the plant P and connection relationships of these (refer to also FIG. 2). The plant configuration diagram F1 may also reflect actual positional relationships between the devices 3 in the plant P.

The alarm collection unit 10 collects (acquires) alarms of the devices 3 output from the control device 2. The alarm collection unit 10 outputs the collected alarms to the alarm storage unit 11.

The alarm storage unit 11 acquires an alarm from the alarm collection unit 10. The alarm storage unit 11 stores (memorizes) the acquired alarm. A plurality of alarms output from the control device 2 may be accumulated in the alarm storage unit 11.

The alarm generation unit 13 refers to the alarm storage unit 11 and acquires the alarm output from the control device 2. The alarm generation unit 13 also refers to the plant configuration diagram storage unit 12 and acquires the plant configuration diagram F1. The alarm generation unit 13 generates an alarm occurrence diagram F2 on the basis of the acquired alarm and plant configuration diagram F1. The alarm generation unit 13 outputs the generated alarm occurrence diagram F2 to the alarm generation unit 13 and the display unit 14.

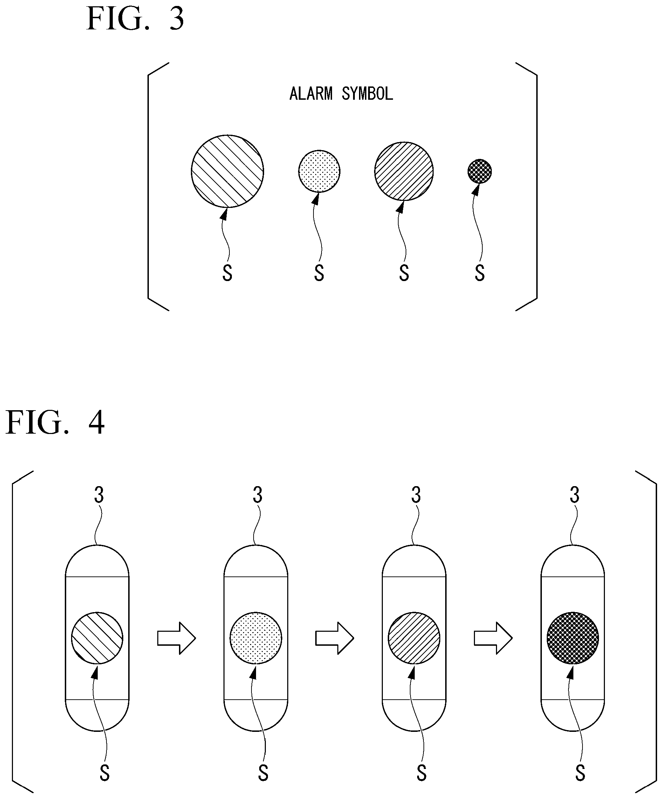

FIG. 2 is a diagram which shows an example of the alarm occurrence diagram F2 according to the present embodiment. FIG. 3 is a diagram which shows an example of an alarm symbol S according to the present embodiment. The alarm occurrence diagram F2 is a diagram which displays an alarm symbol S on the plant configuration diagram F1 to indicate that an alarm has occurred from an abnormal device 3A. A shape of the alarm symbol S is not particularly limited, and may be, for example, a circular shape.

In generating the alarm occurrence diagram F2, the device 3 according to the present embodiment generates the alarm symbol S on the basis of an alarm occurrence time (a timing at which an alarm has occurred), an alarm disappearance time (a timing at which an alarm has disappeared), a position of the abnormal device 3A, an alarm occurrence frequency, and an alarm importance. Hereinafter, a detailed description is provided.

First, the alarm generation unit 13 switches whether to display the alarm symbol S in the alarm occurrence diagram F2 on the basis of the alarm occurrence time and the alarm disappearance time. That is, in generating the alarm occurrence diagram F2, when an abnormality occurs in the abnormal device 3A and an alarm occurs, the alarm generation unit 13 displays the alarm symbol S. In other words, when an abnormality occurs in the abnormal device 3A and an alarm occurs, the alarm generation unit 13 generates the alarm occurrence diagram F2 in which the alarm symbol S is displayed. Moreover, in generating the alarm occurrence diagram F2, when the abnormality of the abnormal device 3A is resolved and the alarm disappears, the alarm generation unit 13 hides the alarm symbol S. In other words, when the abnormality of the abnormal device 3A is resolved and the alarm disappears, the alarm generation unit 13 generates the alarm occurrence diagram F2 in which the alarm symbol S is hidden (the alarm symbol S is not displayed).

In addition, in generating the alarm occurrence diagram F2, the alarm generation unit 13 displays the alarm symbol S at a position corresponding to the position of the abnormal device 3A. In other words, the alarm generation unit 13 generates the alarm occurrence diagram F2 in which the position of the alarm symbol S corresponds to the position of the abnormal device 3A. Specifically, in generating the alarm occurrence diagram F2, the alarm generation unit 13 displays the alarm symbol S on or near the abnormal device 3A. In other words, the alarm generation unit 13 generates the alarm occurrence diagram F2 in which the alarm symbol S is displayed on or near the abnormal device 3A. In the example shown in FIG. 2, there are a plurality of abnormal devices 3A, and a plurality of alarm symbols S are displayed corresponding to the abnormal devices 3A. Then, for example, the distillation column 3a and the tank 3b are abnormal devices 3A that cause an alarm to occur, and the alarm symbol S is displayed on the distillation column 3a and the tank 3b.

Moreover, the alarm generation unit 13 varies the size of the alarm symbol S in accordance with the alarm occurrence frequency in generating the alarm occurrence diagram F2. Specifically, the alarm generation unit 13 increases the size of the alarm symbol S as the alarm occurrence frequency increases, and decreases the size of the alarm symbol S as the alarm occurrence frequency decreases.

In addition, the alarm generation unit 13 varies the color of the alarm symbol S on the basis of the alarm importance in generating the alarm occurrence diagram F2. Specifically, the alarm generation unit 13 gradually changes the color of the alarm symbol S from a cool color (blue or blue-green) to a neutral color (green or yellowgreen) and then to a warm color (yellow, orange, red, or red-purple) as the importance of a RAM increases. In addition, in FIGS. 2 to 4, the color of the alarm symbol S is expressed by a type of hatching (shade).

The alarm occurrence diagram storage unit 15 acquires the alarm occurrence diagram F2 output from the alarm generation unit 13. The alarm occurrence diagram storage unit 15 stores (memorizes) the acquired alarm occurrence diagram F2. The alarm occurrence diagram storage unit 15 accumulates a plurality of alarm occurrence diagrams F2 output from the alarm generation unit 13. As shown in FIG. 4, the alarm occurrence diagram F2 (the alarm symbol S) can change over time depending on an alarm occurrence situation in the plant P. FIG. 4 shows an example in which the alarm importance gradually increases and the color of the alarm symbol S changes from a cool color to a warm color.

The alarm occurrence diagram storage unit 15 according to the present embodiment associates the alarm occurrence diagram F2 with event information and stores it. The event information is information related to the operation of the plant P and the occurrence of an alarm, and includes at least a date and time when an alarm has occurred. Examples of the event information other than the date and time include weather information when an alarm has occurred, information on an operation performed by the operator on the plant P (the devices 3) when an alarm has occurred, information on switching of the devices 3, information on a change in a production brand, information on a breakdown of the devices 3, and the like, but the present invention is not limited to these. This event information is input to the plant operation support device 1 by, for example, the operator operating the input unit 19.

The search unit 16 refers to the alarm occurrence diagram storage unit 15 and searches for the alarm occurrence diagram F2 on the basis of the event information. The search unit 16 may output the alarm occurrence diagram F2 obtained by the search to the display unit 14. A search by the search unit 16 is executed, for example, when an operator operates the input unit 19 to give a search instruction.

The plant status diagnosis unit 17 refers to the alarm occurrence diagram storage unit 15 and diagnoses a status of the plant P on the basis of the alarm occurrence diagram F2. The plant status diagnosis unit 17 may output a result of the diagnosis to the display unit 14.

Specifically, the plant status diagnosis unit 17 according to the present embodiment diagnoses the status of the plant P based on a presence or absence, a position, a size, and a color of the alarm symbol S shown in the alarm occurrence diagram F2. That is, the plant status diagnosis unit 17 may diagnose the presence or absence of the occurrence of an alarm in the plant P on the basis of the presence or absence of the alarm symbol S in the alarm occurrence diagram F2. The plant status diagnosis unit 17 may also diagnose which device 3 has the occurrence of an alarm, that is, which device 3 is the abnormal device 3A, on the basis of the position of the alarm symbol S in the alarm occurrence diagram F2. The plant status diagnosis unit 17 may also diagnose the alarm occurrence frequency on the basis of a size of the alarm symbol S. The plant status diagnosis unit 17 may also diagnose the alarm importance on the basis of the color of the alarm symbol S.

The plant status prediction unit 18 refers to the alarm occurrence diagram storage unit 15 and predicts the status of the plant P on the basis of changes over time in the alarm occurrence diagram F2. The plant status prediction unit 18 may output a result of the prediction to the display unit 14.

Specifically, the plant status prediction unit 18 according to the present embodiment predicts the status of the plant P based on the presence or absence, the position, the size, and the color of the alarm symbol S according to changes over time. For example, in a plurality of alarm occurrence diagrams F2 stored in the alarm occurrence diagram storage unit 15, the alarm symbol S that has not been present initially may come to be present as days go by, the size of the alarm symbol S may increase, and the color of the alarm symbol S may change from a cool color to a warm color. In this case, the plant status prediction unit 18 may predict that the status of the device 3 in which the alarm symbol S is occurring (the abnormal device 3A) is deteriorating.

The plant status prediction unit 18 may also estimate how the size of the alarm symbol S will change (become larger) in the future based on a rate of increase in the size of the alarm symbol S. That is, the plant status prediction unit 18 may predict the status of the plant P based on the change in the size of the alarm symbol S. For example, a threshold value may be set for the size of the alarm symbol S (for example, when this threshold value is exceeded, there is a high possibility that the device will break down). In this case, the plant status prediction unit 18 may estimate a time until the size of the alarm symbol S exceeds the threshold value. Then, the plant status prediction unit 18 may predict that the status of the plant P is normal before the threshold value is exceeded, and that the status of the plant P is likely to be abnormal when the threshold value is exceeded. This makes it possible to obtain information that the status of the plant P will be maintained normal if the devices 3 are repaired or maintained by a time when a certain predetermined threshold value is reached, and it is easier to maintain the status of the plant P normally.

In addition, the plant status prediction unit 18 may also extract (learn) the alarm occurrence diagram F2 (an alarm pattern) related to a certain symptom (for example, a certain device 3 breaks down). Then, the plant status prediction unit 18 may detect a typical alarm occurrence diagram F2 (an alarm pattern) when the symptom occurs during the operation of the plant P. When such detection is performed, the plant status prediction unit 18 may predict that the symptom is highly likely to occur.

Moreover, the plant status prediction unit 18 may predict the status of the plant P on the basis of a past alarm occurrence diagram F2 stored in the alarm occurrence diagram storage unit 15 and event information associated with it. For example, the plant status prediction unit 18 may grasp (learn) in advance which device 3 has the occurrence of an alarm when a typhoon came, and the like, based on the alarm occurrence diagram F2 when a typhoon has come in the past. The plant status prediction unit 18 may predict that the device 3 that has the occurrence of an alarm during a past typhoon will be highly likely to cause an alarm to occur again when a next typhoon comes. This makes it possible to predict in advance an operation to be performed on the plant P, such as how to manage the temperature and quality. In other words, the plant status prediction unit 18 may predict the status of the plant P on the basis of a fact that the alarm occurrence diagram F2 depends on weather conditions. As a result, it is possible to predict which device 3 needs to be monitored with priority, based on an alarm occurrence status in the past alarm occurrence diagram F2, when weather similar to past weather is expected. Note that the event information used by the plant status prediction unit 18 for prediction is not limited to weather information. The plant status prediction unit 18 may predict the status of the plant P using the various types of information described above, which are related to the operation of the plant P and the occurrence of an alarm.

The display unit 14 acquires the alarm occurrence diagram F2 output by the alarm generation unit 13. The display unit 14 displays the acquired alarm occurrence diagram F2. The display unit 14 may also acquire and display a result of the diagnosis output by the plant status diagnosis unit 17 and a result of the prediction output by the plant status prediction unit 18. The display unit 14 may also acquire and display a result of the search output by the search unit 16. The display unit 14 is, for example, a liquid crystal display device, an organic electroluminescence (EL) display device, an electronic ink display device, or the like.

In the example described above, the alarm occurrence frequency corresponds to the size of the alarm symbol S, and the alarm importance corresponds to the color of the alarm symbol S, but the correspondence is not limited to this. In other words, the alarm occurrence frequency may correspond to the color of the alarm symbol S, and the alarm importance may correspond to the size of the alarm symbol S.

In addition, in generating the alarm occurrence diagram F2, the alarm generation unit 13 does not have to generate the alarm symbol S on the basis of all of the alarm occurrence time, the alarm disappearance time, the position of the abnormal device 3A, the alarm occurrence frequency, and the alarm importance. The alarm generation unit 13 may generate the alarm symbol S on the basis of at least one of the alarm occurrence time, the alarm disappearance time, the position of the abnormal device 3A, the alarm occurrence frequency, and the alarm importance. For example, when the alarm generation unit 13 generates the alarm symbol S without considering the alarm occurrence frequency, the alarm generation unit 13 may vary both the color of the alarm symbol S and the size of the alarm symbol S according to the alarm importance. Similarly, when the alarm generation unit 13 generates the alarm symbol S without considering the alarm importance, the alarm generation unit 13 may vary both the color of the alarm symbol S and the size of the alarm symbol S according to the alarm occurrence frequency.

Moreover, the alarm collection unit 10 described above may output the collected alarms directly to the alarm generation unit 13 without going through the alarm storage unit 11. In this case, the plant operation support device 1 may not include the alarm storage unit 11.

Functions of each of the units 10 to 19 included in the plant operation support device 1 may be realized by a central processing unit (CPU) executing a program. Alternatively, the functions of each of the units 10 to 19 can be realized using hardware (a circuit unit; including circuitry) such as large scale integration (LSI), an application specific integrated circuit (ASIC), a field-programmable gate array (FPGA), or a graphics processing unit (GPU). Alternatively, the functions of each of the units 10 to 19 can be realized by software and hardware in cooperation. The functions of each of the units 10 to 19 may be realized by the same hardware, or may be realized by different pieces of hardware.

### <Processing performed by plant operation support device>

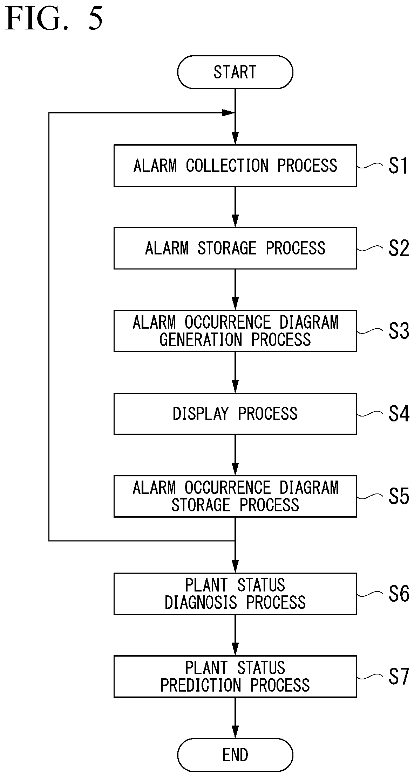

Next, an example of processing performed by the plant operation support device 1 configured as described above will be described with reference to FIG. 5. FIG. 5 is a flowchart which shows an example of processing performed in the plant operation support device 1 according to the present embodiment.

First, an alarm collection process S1 is performed. In the alarm collection process S1, the alarm collection unit 10 collects alarms of the devices 3 output from the control device 2. The alarm collection unit 10 outputs the collected alarms to the alarm storage unit 11.

Next, an alarm storage process S2 is performed. In the alarm storage process S2, the alarm storage unit 11 acquires alarms from the alarm collection unit 10. The alarm storage unit 11 stores the acquired alarms.

Next, an alarm occurrence diagram generation process S3 is performed. In the alarm occurrence diagram generation process S3, the alarm generation unit 13 acquires the alarms output from the control device 2 by referring to the alarm storage unit 11. In addition, the alarm generation unit 13 refers to the plant configuration diagram storage unit 12 and acquires the plant configuration diagram F1. The alarm generation unit 13 generates the alarm occurrence diagram F2 on the basis of the acquired alarms and plant configuration diagram F1. The alarm generation unit 13 outputs the generated alarm occurrence diagram F2 to the alarm generation unit 13 and the display unit 14.

After the alarm occurrence diagram generation process S3, a display process S4 is performed. In the display process S4, the display unit 14 acquires the alarm occurrence diagram F2 output by the alarm generation unit 13. The display unit 14 displays the acquired alarm occurrence diagram F2.

After the alarm occurrence diagram generation process S3, an alarm occurrence diagram storage process S5 is performed. Note that an order of the display process S4 and the alarm occurrence diagram storage process S5 is not particularly limited. In the alarm occurrence diagram storage process S5, the alarm occurrence diagram storage unit 15 acquires the alarm occurrence diagram F2 output by the alarm generation unit 13. The alarm occurrence diagram storage unit 15 stores the acquired alarm occurrence diagram F2.

The alarm collecting process S1 to the alarm occurrence diagram storage process S5 described above are repeated a plurality of times at predetermined time intervals. The alarm occurrence diagram storage unit 15 accumulates a plurality of alarm occurrence diagrams F2 output from the alarm generation unit 13.

After the alarm collection process S1 to the alarm occurrence diagram storage process S5 are repeated a predetermined number of times, a plant status diagnosis process S6 is performed. In the plant status diagnosis process S6, the plant status diagnosis unit 17 refers to the alarm occurrence diagram storage unit 15 and diagnoses the status of the plant P on the basis of the alarm occurrence diagram F2. The plant status diagnosis unit 17 may output a result of the diagnosis to the display unit 14. The display unit 14 may acquire and display the result of the diagnosis output by the plant status diagnosis unit 17.

After the alarm collection process S1 to the alarm occurrence diagram storage process S5 are repeated a predetermined number of times, a plant status prediction process S7 is performed. An order of the plant status diagnosis process S6 and the plant status prediction process S7 is not particularly limited. In the plant status prediction process S7, the plant status prediction unit 18 refers to the alarm occurrence diagram storage unit 15 and predicts the status of the plant P on the basis of the changes over time in the alarm occurrence diagram F2. The plant status prediction unit 18 may output a result of the prediction to the display unit 14. The display unit 14 may acquire and display the result of the prediction output by the plant status diagnosis unit 17.

The plant status diagnosis process S6 and the plant status prediction process S7 may be executed by, for example, an operator operating the input unit 19 to give an execution instruction. Alternatively, the plant status diagnosis process S6 and the plant status prediction process S7 may be executed automatically after the alarm collection process S1 to the alarm occurrence diagram storage process S5 are repeated a predetermined number of times.

### <Effects of plant operation support device>

Next, effects of the plant operation support device 1 configured as described above will be described.

Conventionally, a plant operation support device that collects alarms output when an abnormality in the plant is detected and present the collected alarms to the operator (refer to, for example, Patent Document 1) is known. In such a plant operation support device, it is desirable for the alarm to be presented in a form that is easy for the operator to understand.

For this reason, the plant operation support device 1 according to the present embodiment is a plant operation support device used for a plant P having one or more devices 3 and the control device 2 that controls the one or more devices 3, and includes the plant configuration diagram storage unit 12 having the plant configuration diagram F1 constituted from one or more devices, the alarm collection unit 10 that collects alarms for the devices 3 output from the control device 2 when the control device 2 determines that output values output from the devices 3 are not within a predetermined range, the alarm generation unit 13 that generates the alarm occurrence diagram F2 that displays an alarm symbol S on the plant configuration diagram F1 to indicate that an alarm has occurred from the abnormal device 3A, which is the device 3 that has caused the alarm to occur, and the display unit 14 that displays the alarm occurrence diagram F2.

With this configuration, information on the alarm is displayed on the display unit 14 in a form of the alarm occurrence diagram F2 that displays the alarm symbol S on the plant configuration diagram F1. As a result, the alarm can be presented in a form that is easy for the operator to understand.

In addition, in a conventional operation support device, an operating status of the plant P has not been diagnosed or predicted from visualized alarm information (alarm occurrence diagram). Moreover, an event (for example, a process value falling below a set value) when an alarm has occurred cannot be known based on the visualized alarm information, and conversely, it is not possible to know what kind of alarm will occur when a certain event (for example, rainfall) occurs.

In contrast, the plant operation support device 1 according to the present embodiment further includes the plant status diagnosis unit 17 that diagnoses the status of the plant P on the basis of the alarm occurrence diagram F2. With this configuration, the status of the plant P can be diagnosed.

In addition, the plant operation support device 1 according to the present embodiment further includes the plant status prediction unit 18 that predicts the status of the plant P on the basis of the changes over time in the alarm occurrence diagram F2. With this configuration, the status of the plant P can be predicted.

Moreover, the plant operation support device 1 according to the present embodiment further includes the alarm occurrence diagram storage unit 15 that stores the alarm occurrence diagram F2 in association with event information including the date and time when an alarm has occurred, and the search unit 16 that searches for the alarm occurrence diagram F2 on the basis of the event information. With this configuration, it is possible to know what alarm will occur when a certain event occurs.

### <Modified example>

A technical scope of the present invention is not limited to the embodiment, and various modifications can be made within a range not departing from the gist of the present invention.

For example, the alarm occurrence diagram storage unit 15 may store the alarm occurrence diagram F2 in association with detailed information on an alarm. Examples of the detailed information on an alarm include, for example, a title of the alarm, a name of the device 3 (the abnormal device 3A) where the alarm is occurring, a position of the device 3 (the abnormal device 3A), an alarm occurrence frequency, and an alarm importance. When the operator clicks on the alarm symbol S on the display unit 14, these types of detailed information may be displayed on the display unit 14. For example, when the number of alarm occurrences per hour is 30 or more, it may be displayed as information on importance 3, when it is 10 to 29, it may be displayed as information on importance 2, and when it is 9 or less, it may be displayed as information on importance 1. In addition, an alarm that requires an immediate response may be displayed as the importance 3, an alarm that requires future attention may be displayed as the importance 2, and an alarm that is minor and does not require a response at present may be displayed as the importance 1. Furthermore, when the operator clicks on the alarm symbol S, a cause of the alarm and a way to deal with it, and the like, in addition to the detailed information, may be displayed on the display unit 14.

The plant operation support device 1 may also include a plurality of terminals that can communicate with each other via the Internet, or the like. The display unit 14 on which the alarm occurrence diagram F2 is displayed may be provided on a mobile terminal such as a smartphone. By displaying the alarm occurrence diagram F2 on such a mobile terminal, the operator can operate the device 3 at a location of the device 3 where an alarm has occurred, according to the alarm information (for example, how to deal with a cause of the alarm) displayed on the mobile terminal. Furthermore, a mobile terminal that records positional information of the device 3 in advance as detailed alarm information and has a navigation function may be used. In this case, the operator can smoothly move to the location of the device 3 where the alarm has occurred by using a navigation function of the mobile terminal.

In addition, it is possible to replace components in the embodiment described above with well-known components as appropriate, and the embodiment and modified example described above may be combined as appropriate, within a range not departing from the gist of the present invention.

Each component of the plant operation support device 1 described above has a computer system inside. Then, a program for realizing a function of each component of the plant operation support device 1 described above may be recorded on a computer-readable recording medium, and the program recorded on the recording medium may be read into the computer system and executed to perform processing in each component of the plant operation support device 1 described above. Here, "reading the program recorded on the recording medium into the computer system and executing it" includes installing the program into the computer system. The "computer system" here includes an OS and hardware such as peripheral devices.

In addition, the "computer system" may include a plurality of computer devices connected via a network including the Internet or communication lines such as a WAN, a LAN, and a dedicated line. Moreover, a term "computer-readable recording medium" refers to a portable medium such as a flexible disk, an optical magnetic disk, a ROM, and a CD-ROM, as well as a storage device such as a hard disk embedded in a computer system. Thus, the recording medium storing the program may be a non-transient recording medium such as a CD-ROM.

Moreover, the recording medium includes a recording medium that is internally or externally provided and accessible from a distribution server to distribute the program. The program may be divided into a plurality of parts, downloaded at different timings, and then combined in each constituent of the plant operation support device 1, or each divided program may be distributed by a different distribution server. Furthermore, the term "computer-readable recording medium" also includes a medium that holds the program for a certain period of time, such as a volatile memory (RAM) inside a computer system that serves as a server or client when the program is transmitted via a network. In addition, the program may be for realizing part of the functions described above. Furthermore, the program may be a program that can realize the functions described above in combination with a program already recorded in the computer system, that is, a so-called differential file (differential program).

As used herein, the following directional terms "front, back, above, downward, right, left, vertical, horizontal, below, transverse, row and column" as well as any other similar directional terms refer to those instructions of a device equipped with the present disclosure. Accordingly, these terms, as utilized to describe the present disclosure should be interpreted relative to a device equipped with the present disclosure.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present disclosure.

The term "unit" is used to describe a component, unit or part of a hardware and/or software that is constructed and/or programmed to carry out the desired function. Typical examples of the hardware may include, but are not limited to, a device and a circuit.

While preferred embodiments of the present disclosure have been described and illustrated above, it should be understood that these are examples of the present disclosure and are not to be considered as limiting. Additions, omissions, substitutions, and other modifications can be made without departing from the scope of the present disclosure. Accordingly, the present disclosure is not to be considered as being limited by the foregoing description, and is only limited by the scope of the claims.

## Claims

1. A plant operation support device that is used in a plant having one or more devices and a control device that controls the one or more devices, the plant operation support device comprising:
a plant configuration diagram storage unit that stores a plant configuration diagram constituted from the one or more devices;
an alarm collection unit configured to collect alarms of the devices output from the control device when the control device determines that output values output from the devices are not within a predetermined range;
an alarm generation unit configured to generate an alarm occurrence diagram that displays an alarm symbol on the plant configuration diagram to indicate that the alarms have occurred from abnormal devices that are the devices that have caused the alarms to occur; and
a display unit configured to display the alarm occurrence diagram.

2. The plant operation support device according to claim 1,
wherein the alarm generation unit configured to generate the alarm symbol on the basis of at least one of an alarm occurrence time, an alarm disappearance time, a position of the abnormal device, an alarm occurrence frequency, and an alarm importance in generating the alarm occurrence diagram.

3. The plant operation support device according to claim 2,
wherein the alarm generation unit configured to display the alarm symbol when the alarm occurs and hide the alarm symbol when the alarm disappears in generating the alarm occurrence diagram.

4. The plant operation support device according to claim 2,
wherein the alarm generation unit configured to display the alarm symbol on or near the abnormal device in generating the alarm occurrence diagram.

5. The plant operation support device according to claim 2,
wherein the alarm generation unit configured to vary at least one of a color of the alarm symbol or a size of the alarm symbol according to the alarm occurrence frequency in generating the alarm occurrence diagram.

6. The plant operation support device according to claim 2,
wherein the alarm generation unit configured to vary at least one of a color of the alarm symbol or a size of the alarm symbol according to the alarm importance in generating the alarm occurrence diagram.

7. The plant operation support device according to any one of claims 1 to 6, further comprising:
a plant status diagnosis unit configured to diagnose a status of the plant on the basis of the alarm occurrence diagram.

8. The plant operation support device according to any one of claims 1 to 6, further comprising:
a plant status prediction unit configured to predict a status of the plant on the basis of a change over time of the alarm occurrence diagram.

9. The plant operation support device according to any one of claims 1 to 6, further comprising:
an alarm occurrence diagram storage unit configured to store the alarm occurrence diagram in association with event information including a date and time when the alarm has occurred; and
a search unit configured to search the alarm occurrence diagram on the basis of the event information.
